# EUROPEAN PATENT APPLICATION

(11) **EP 4 495 914 A1**
(43) Date of publication of application: **22.01.2025**
(21) Application number: 24188813.0
(22) Date of filing: 16.07.2024
(51) Int. Cl.: G08G 5/00, B64D 43/00, B64D 45/08, G01C 23/00, G08G 5/02

(54) **SYSTEMS AND METHODS FOR DISPLAYING A LANDING RUNWAY EXTENSION ON AN AIRCRAFT**

(30) Priority: 21.07.2023 US 202318356414
(71) Applicant: Honeywell International Inc., Charlotte, NC 28202 (US)
(72) Inventor: MIYAZAKI, Yasutaka, Charlotte, 28202 (US)
(74) Representative: LKGlobal UK Ltd.

(57) **Abstract**

Systems and methods are provided for displaying a landing runway extension on an aircraft. A destination airport of the aircraft is identified based on a flight path of the aircraft received from a flight management system (FMS) of the aircraft. A location of the aircraft is determined based on location data received from at least one geospatial sensor of the aircraft. A landing runway at the destination airport is identified. A display is generated for display on an onboard display device system of the aircraft when the location of the aircraft is within a pre-defined distance from the destination airport. The display includes the landing runway and the landing runway extension associated with a desired final approach flight path to the landing runway.

## Description

### TECHNICAL FIELD

The present invention generally relates to aircraft operations and more particularly relates to systems and methods for displaying a landing runway extension on an aircraft.

### BACKGROUND

An approach flight path of an aircraft to a destination airport is not always aligned with a final approach flight path to a landing runway at the destination airport. In such cases, the pilot has to implement a circling maneuver to align the flight path of the aircraft with the final approach flight path to the landing runway.

Many destination airports have a designated circling area of airspace that guarantees a minimum obstacle clearance protection area. The circling area is plotted with arcs drawn a specified distance from the end of each runway at the destination airport. The arcs connect to form a circle that marks the boundaries or outer perimeter of the circling area.

On clear days, a pilot typically flies manually and visually implements the circling maneuver within a designated circling area associated with the destination airport. Low visibility conditions, such as for example, long hanging clouds or fog, may create safety challenges associated with the implementation of the circling maneuver. Low visibility conditions can result in a loss of situational awareness.

Hence, there is a need for systems and methods for displaying a landing runway extension to facilitate implementation of circling maneuvers to properly align the aircraft with the final approach flight path to the landing runway while remaining within the circling area.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various embodiments, a landing runway extension display system of an aircraft, the system includes at least one processor and at least one memory communicatively coupled to the at least one processor. The at least one memory includes instructions that upon execution by the at least one processor, cause the at least one processor to: identify a destination airport of the aircraft based on a flight path of the aircraft received from a flight management system (FMS) of the aircraft; determine a location of the aircraft based on location data received from at least one geospatial sensor of the aircraft; identify a landing runway at the destination airport; and generate a display for display via an onboard display device system of the aircraft when the location of the aircraft is within a pre-defined distance from the destination airport, the display including the landing runway and the landing runway extension associated with a desired final approach flight path to the landing runway.

In various embodiments, a method of displaying a landing runway extension on an aircraft includes: identifying a destination airport of the aircraft based on a flight path of the aircraft received from a flight management system (FMS) of the aircraft; determining a location of the aircraft based on location data received from at least one geospatial sensor of the aircraft; identifying a landing runway at the destination airport; and generating a display for display via an onboard display device system of the aircraft when the location of the aircraft is within a pre-defined distance from the destination airport, the display including the landing runway and the landing runway extension associated with a desired final approach flight path to the landing runway.

Furthermore, other desirable features and characteristics of the system and method for displaying a landing runway extension on an aircraft become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram representation of a system configured to implement a system for displaying a landing runway extension on an aircraft in accordance with least one embodiment;
FIG. 2 is a block diagram representation of an aircraft including a landing runway extension display system in accordance with at least one embodiment;
FIG. 3 is a flowchart representation of a method of displaying a landing runway extension on an aircraft in accordance with at least one embodiment;
FIG. 4 is a diagrammatic representation of an exemplary cockpit display including a landing activation prompt in accordance with at least one embodiment; and
FIG. 5 is a diagrammatic representation of an exemplary navigation display including a landing runway extension associated with a desired final approach flight path to a landing runway in accordance with at least one embodiment.

### DETAILED DESCRIPTION

The following detailed description is merely exemplary in nature. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

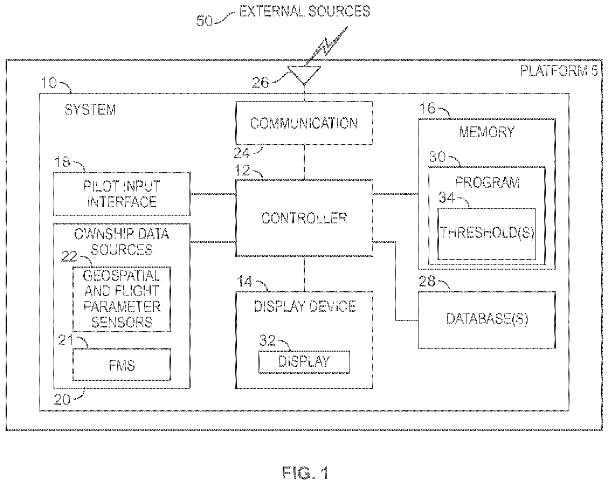

FIG. 1 is a block diagram representation of a system 10 configured to display a landing runway extension on an aircraft in accordance with an embodiment (shortened herein to "system" 10), as illustrated in accordance with an exemplary and non-limiting embodiment of the present disclosure. The system 10 may be utilized onboard a mobile platform 5, as described herein. In various embodiments, the mobile platform is an aircraft, which carries or is equipped with the system 10. As schematically depicted in FIG. 1, the system 10 includes the following components or subsystems, each of which may assume the form of a single device or multiple interconnected devices: a controller circuit 12 operationally coupled to: at least one display device 14; computer-readable storage media or memory 16; an optional input interface 18, and ownship data sources 20 including, for example, a flight management system (FMS) 21 and an array of flight system state and geospatial sensors 22.

In various embodiments, the system 10 may be separate from or integrated within: the flight management system (FMS) 21 and/or a flight control system (FCS). Although schematically illustrated in FIG. 1 as a single unit, the individual elements and components of the system 10 can be implemented in a distributed manner utilizing any practical number of physically distinct and operatively interconnected pieces of hardware or equipment. When the system 10 is utilized as described herein, the various components of the system 10 will typically all be located onboard the mobile platform 5.

The term "controller circuit" (and its simplification, "controller"), broadly encompasses those components utilized to carry-out or otherwise support the processing functionalities of the system 10. Accordingly, the controller circuit 12 can encompass or may be associated with a programmable logic array, application specific integrated circuit or other similar firmware, as well as any number of individual processors, flight control computers, navigational equipment pieces, computer-readable memories (including or in addition to the memory 16), power supplies, storage devices, interface cards, and other standardized components. In various embodiments, the controller circuit 12 embodies one or more processors operationally coupled to data storage having stored therein at least one firmware or software program (generally, computer-readable instructions that embody an algorithm) for carrying-out the various process tasks, calculations, and control/display functions described herein. During operation, the controller circuit 12 may be programmed with and execute the at least one firmware or software program, for example, a program 30, that embodies an algorithm described herein for displaying a landing runway extension on an aircraft in accordance with an embodiment on a mobile platform 5, where the mobile platform 5 is an aircraft, and to accordingly perform the various process steps, tasks, calculations, and control/display functions described herein.

The controller circuit 12 may exchange data, including real-time wireless data, with one or more external sources 50 to support operation of the system 10 in embodiments. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

The memory 16 is a data storage that can encompass any number and type of storage media suitable for storing computer-readable code or instructions, such as the aforementioned software program 30, as well as other data generally supporting the operation of the system 10. The memory 16 may also store one or more threshold 34 values, for use by an algorithm embodied in software program 30. One or more database(s) 28 are another form of storage media; they may be integrated with memory 16 or separate from it.

In various embodiments, aircraft-specific parameters and information for an aircraft may be stored in the memory 16 or in a database 28 and referenced by the program 30. Non-limiting examples of aircraft-specific information includes an aircraft weight and dimensions, performance capabilities, configuration options, and the like.

Flight parameter sensors and geospatial sensors 22 supply various types of data or measurements to the controller circuit 12 during an aircraft flight. In various embodiments, the geospatial sensors 22 supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

With continued reference to FIG. 1, the display device 14 can include any number and type of image generating devices on which one or more avionic displays 32 may be produced. When the system 10 is utilized for a manned aircraft, the display device 14 may be affixed to the static structure of the Aircraft cockpit as, for example, a Head Down Display (HDD) or Head Up Display (HUD) unit. In various embodiments, the display device 14 may assume the form of a movable display device (e.g., a pilot-worn display device) or a portable display device, such as an Electronic Flight Bag (EFB), a laptop, or a tablet computer carried into the aircraft cockpit by a pilot.

At least one avionic display 32 is generated on the display device 14 during operation of the system 10; the term "avionic display" is synonymous with the term "aircraft-related display" and "cockpit display" and encompasses displays generated in textual, graphical, cartographical, and other formats. The system 10 can generate various types of lateral and vertical avionic displays 32 on which map views and symbology, text annunciations, and other graphics pertaining to flight planning are presented for a pilot to view. The display device 14 is configured to continuously render at least a lateral display showing the aircraft at its current location within the map data. The avionic display 32 generated and controlled by the system 10 can include graphical user interface (GUI) objects and alphanumerical input displays of the type commonly presented on the screens of multifunction control display units (MCDUs), as well as Control Display Units (CDUs) generally. Specifically, embodiments of the avionic displays 32 include one or more two-dimensional (2D) avionic displays, such as a horizontal (i.e., lateral) navigation display or vertical navigation display (i.e., vertical situation display VSD); and/or on one or more three dimensional (3D) avionic displays, such as a Primary Flight Display (PFD) or an exocentric 3D avionic display.

In various embodiments, a human-machine interface is implemented as an integration of a pilot input interface 18 and a display device 14. In various embodiments, the display device 14 is a touch screen display. In various embodiments, the human-machine interface also includes a separate pilot input interface 18 (such as a keyboard, cursor control device, voice input device, or the like), generally operationally coupled to the display device 14. Via various display and graphics systems processes, the controller circuit 12 may command and control a touch screen display device 14 to generate a variety of graphical user interface (GUI) objects or elements described herein, including, for example, buttons, sliders, and the like, which are used to prompt a user to interact with the human-machine interface to provide user input; and for the controller circuit 12 to activate respective functions and provide user feedback, responsive to received user input at the GUI element.

In various embodiments, the system 10 may also include a dedicated communications circuit 24 configured to provide a real-time bidirectional wired and/or wireless data exchange for the controller 12 to communicate with the external sources 50 (including, each of: traffic, air traffic control (ATC), satellite weather sources, ground stations, neighboring aircraft, and the like). In various embodiments, the communications circuit 24 may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications circuit 24 is integrated within the controller circuit 12, and in other embodiments, the communications circuit 24 is external to the controller circuit 12.

In certain embodiments of the system 10, the controller circuit 12 and the other components of the system 10 may be integrated within or cooperate with any number and type of systems commonly deployed onboard an aircraft including, for example, an FMS 21.

The disclosed algorithm is embodied in a hardware program or software program (e.g. program 30 in controller circuit 12) and configured to operate when the aircraft is in any phase of flight. The algorithm enables display of a landing runway extension on the aircraft.

In various embodiments, the provided controller circuit 12, and therefore its program 30 may incorporate the programming instructions for: identifying a destination airport of the aircraft based on a flight path of the aircraft received from a flight management system (FMS) of the aircraft; determining a location of the aircraft based on location data received from at least one geospatial sensor of the aircraft; identifying a landing runway at the destination airport; and generating a display for display via an onboard display device system when the location of the aircraft is within a pre-defined distance from the destination airport, the display including the landing runway and the landing runway extension associated with a desired final approach flight path to the landing runway.

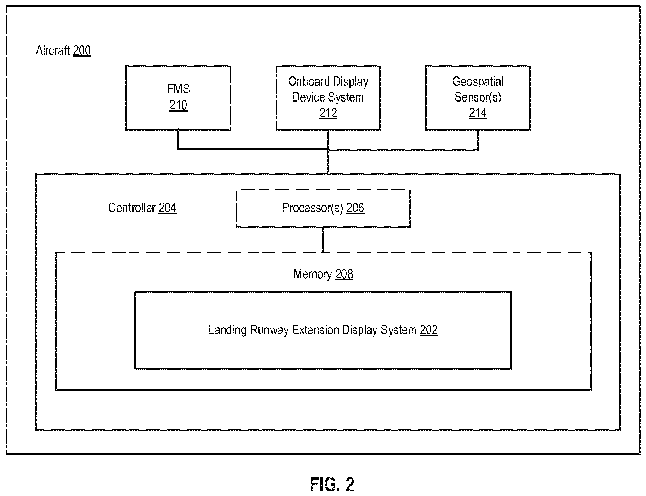

Referring to FIG. 2, block diagram representation of an aircraft 200 including a landing runway extension display system 202 in accordance with at least one embodiment is shown. In various embodiments, the configuration of the aircraft 200 is similar to the configuration of platform 5 described with reference to FIG. 1. The aircraft 200 includes at least one controller 204. The controller 204 includes at least one processor 206 and at least one memory 208. The memory 208 includes the landing runway extension display system 202. In various embodiments, the controller 204 may include additional components that facilitate operation of the controller 204.

The controller 204 is configured to be communicatively coupled to an FMS 210, an onboard display device system 212, and one or more geospatial sensor(s) 214. The FMS 210 is similar to the FMS 21 in FIG. 1. The onboard display device system 212 includes one or more display devices. The one or more display devices are similar to the display devices 14 in FIG. 1. The one or more geospatial sensor(s) 214 are similar to the geospatial sensors 22 in FIG. 1.

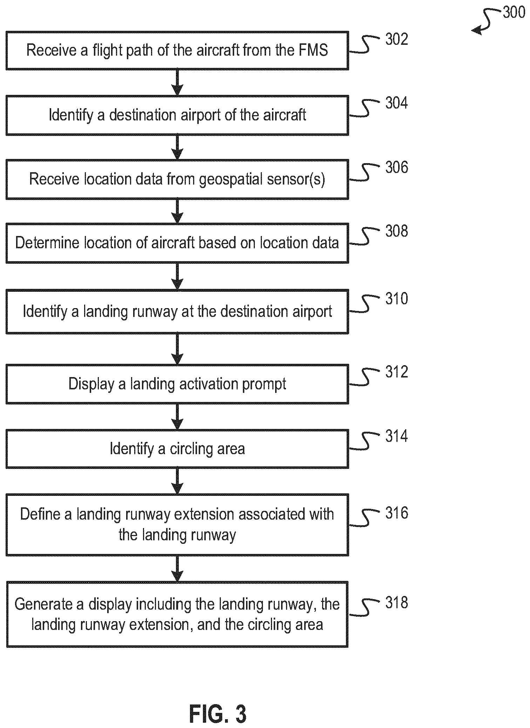

The aircraft 200, the controller 204, and/or the landing runway extension display system 202 may include additional components that facilitate operation of the landing runway extension display system 202. The operation of the landing runway extension display system 202 will be described in further detail below with reference to FIG. 3.

Referring to FIG. 3, a flowchart representation of a method 300 of displaying a landing runway extension on an aircraft 200 in accordance with at least one embodiment is shown. The method 300 will be described with reference to an exemplary implementation of a landing runway extension display system 202. As can be appreciated in light of the disclosure, the order of operation within the method 300 is not limited to the sequential execution as illustrated in FIG. 3 but may be performed in one or more varying orders as applicable and in accordance with the present disclosure.

At 302, the landing runway extension display system 202 receives a flight path of the aircraft 200 from the FMS 210. At 304, the landing runway extension display system 202 identifies a destination airport of the aircraft 200 based on the flight path of the aircraft 200. In various embodiments, the destination airport is identified as a destination waypoint on the flight path of the aircraft 200.

At 306, the landing runway extension display system 202 receives location data from one or more geospatial sensor(s) 214 of the aircraft. At 308, the landing runway extension display system 202 determines a location of the aircraft based on the received location data.

At 310, the landing runway extension display system 202 identifies a landing runway at the destination airport. A destination airport may include multiple runways. In at least one embodiment, the landing runway extension display system 202 receives the landing runway from air traffic control (ATC). In at least one embodiment, the flight crew can specify the landing runway that is different from an approach runway.

At 312, the landing runway extension display system 202 displays a landing activation prompt. The landing runway extension display system 202 displays the landing activation prompt via the onboard display device system 212. In at least one embodiment, the landing runway extension display system 202 displays the landing activation prompt when the location of the aircraft 200 is within a pre-defined distance from the destination airport. In at least one embodiment, the landing runway extension display system 202 displays the landing activation prompt at a specific location along the FMS flight plan. For example, the landing runway extension display system 202 displays the landing activation prompt upon sequencing a certain approach waypoint. The landing runway extension display system 202 generates the landing activation prompt for display on a cockpit display. Examples of a cockpit display include, a navigation display, a multifunction control display (MCDU), and a primary flight display (PFD). In at least one embodiment, the landing activation prompt is displayed as a selectable prompt on a display device 14. The landing activation prompt is activated upon selection of the landing activation prompt via a user input device.

At 314, the landing runway extension display system 202 identifies a circling area. The landing runway extension display system 202 identifies the circling area. associated with the destination airport. In at least one embodiment, the landing runway extension display system 202 identifies the circling area upon a determination that the landing activation prompt has been activated by a crew member. The circling area is defined by an outer perimeter of the circling area.

Each destination airport includes a plurality of different circling areas. Each circling area is associated with a specific category of an aircraft 200. Each aircraft 200 is typically categorized as a Category A aircraft, a Category B aircraft, a Category C aircraft, a Category D aircraft, and a Category E aircraft. An aircraft 200 is categorized based on one or more characteristics of the aircraft 200 that define a circling approach radius of that aircraft 200. Examples of characteristics of the aircraft 200 include, but are not limited to, aircraft type, aircraft weight, and aircraft size.

In at least one embodiment, the circling areas for each of the different categories of aircraft 200 at different airports are stored at the landing runway extension display system 202. In various embodiments, the landing runway extension display system 202 includes a database (not shown). The circling areas for each of the categories of aircraft 200 at different airports are stored in the database. In at least one embodiment, the landing runway extension display system 202 determines the category of the aircraft 200 and identifies the circling area for the identified category of the aircraft 200 at the destination airport. The landing runway extension display system 202 identifies the circling area at the destination airport that is specific to the category of the aircraft 200. In at least one embodiment, the landing runway extension display system 202 receives the circling area from ATC.

At 316, the landing runway extension display system 202 defines a landing runway extension associated with the landing runway at the destination airport. The landing runway extension is an extension of the landing runway and is aligned with a desired final approach flight path of the aircraft 200 to the landing runway. The landing runway extension defines the desired final approach flight path to the landing runway. In at least one embodiment, the landing runway extension display system 202 defines the landing runway extension associated with the landing runway at the destination airport upon a determination that the landing activation prompt has been activated. In at least one embodiment, the landing runway extension display system 202 defines the landing runway extension associated with the landing runway at the destination airport upon a determination that the aircraft 200 is within a pre-defined distance from the destination airport.

The aircraft 200 has an approach flight path to the destination airport. In some cases, the approach flight path of the aircraft 200 to the destination airport is aligned with the desired final approach flight path to the landing runway at the destination airport. In such cases, the landing runway extension is defined as extending along the approach flight path of the aircraft 200.

The approach flight path of the aircraft 200 to the destination airport is not always aligned with the desired final approach flight path to the landing runway at the destination airport. The desired final approach flight path is different from the approach flight path. The landing runway extension is defined as extending along the desired final approach flight path of the aircraft 200. In such cases, the crew member has to implement a circling maneuver to align the flight path of the aircraft with the desired final approach flight path to the landing runway.

In at least one embodiment, the landing runway extension is defined as extending from an end of the landing runway where the aircraft 200 is expected to touch down to the outer perimeter of the circling area. In at least one embodiment, the landing runway extension is defined as extending from the end of the landing runway where the aircraft 200 is expected to touch down to past the outer perimeter of the circling area. In at least one embodiment, the landing runway extension is defined as extending from the end of the landing runway where the aircraft 200 is expected to touch down towards the outer perimeter of the circling area, but does not reach or cross the outer perimeter of the circling area.

At 318, the landing runway extension display system 202 generates a display that includes the landing runway, the landing runway extension, and the circling area. In at least one embodiment, the landing runway extension display system 202 generates the display that includes the landing runway, the landing runway extension, and the circling area for display via the onboard display device system 212. In at least one embodiment, the onboard display device system 212 includes a display device 14 that is configured to display a navigation display. The landing runway extension display system 202 generates the navigation display that includes the landing runway, the landing runway extension, and the circling area for display on the display device 14.

In at least one embodiment, the landing runway extension display system 202 generates the display with the landing runway designated using a first color and the landing runway extension designated using a second color. The first color is different from the second color. In at least one embodiment, the landing runway extension display system 202 generates the display with the landing runway designated using a first format and the landing runway extension designated using a second format. The first format is different from the second format. The landing runway extension may be designated using a bolded lines compared to the designation of the landing runway. The landing runway may be designated using a bolded lines compared to the designation of the landing runway extension. The landing runway extension may be designated using dotted lines and landing runway may be designated using solid lines. The landing runway may be designated as a rectangle and the landing runway extension may be designated as a line. The landing runway may be depicted as is typically depicted on a navigation display and the landing runway extension may be depicted as a line extending from the landing runway.

In at least one embodiment, the landing runway extension display system 202 generates the display that includes the landing runway, the landing runway extension, and the circling area when the aircraft 200 is within the pre-defined distance of the destination airport. In at least one embodiment, the landing runway extension display system 202 generates the display that includes the landing runway, the landing runway extension, and the circling area when the aircraft 200 upon a determination that the landing activation prompt has been activated.

The circling area overlays the landing runway and the landing runway extension. In at least one embodiment, the landing runway extension extends from an end of the landing runway where the aircraft 200 is expected to touch down to the outer perimeter of the circling area. In at least one embodiment, the landing runway extension extends from the end of the landing runway where the aircraft 200 is expected to touch down to past the outer perimeter of the circling area. In at least one embodiment, the landing runway extension extends from the end of the landing runway where the aircraft 200 is expected to touch down towards the outer perimeter of the circling area but does not extend to the outer perimeter of the circling area.

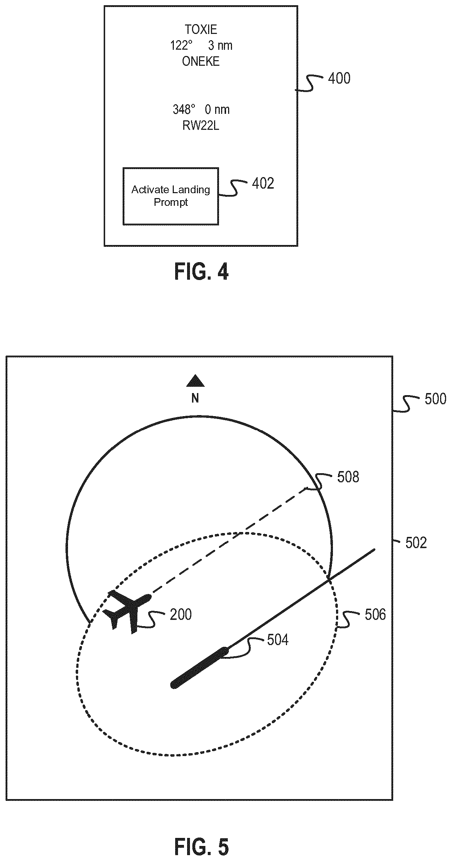

Referring to FIG. 4, a diagrammatic representation of an exemplary cockpit display 400 including a landing activation prompt 402 in accordance with at least one embodiment is shown. The cockpit display 400 includes a waypoint TOXIE along the flight path of the aircraft 200 and the destination waypoint ONEKE. The destination airport is located at the destination waypoint ONEKE. The aircraft 200 has a course of 122° as the aircraft 200 flies from TOXIE to ONEKE. The course of 122° defines the approach flight path of the aircraft 200 to the destination airport at the destination waypoint ONEKE.

The landing runway extension display system 202 of the aircraft 200 has received the landing runway RW22L from ATC. In order to land on the landing runway RW22L, the aircraft 200 will have to have a course of 348°. The pilot of the aircraft 200 will have to engage in a circling maneuver to alter the course of the aircraft 200 from the course of 122° to the course of 348°. The course of 348° defines the final approach flight path of the aircraft 200 to the landing runway RW22L.

The landing runway extension display system 202 has determined that a location of the aircraft 200 is within a pre-defined distance of the destination airport at ONEKE and displayed the landing activation prompt 402. The landing activation prompt 402 is a selectable prompt. The landing activation prompt is activated upon selection of the landing activation prompt via a user input device by a crew member.

In at least one embodiment, the system provides the guidance (i.e., steer the aircraft 200 laterally and vertically along the final approach path). The cockpit display 400 may include other elements that facilitate guidance and navigation of the aircraft 200.

Referring to FIG. 5, a diagrammatic representation of an exemplary navigation display 500 including a landing runway extension 502 defining a desired final approach flight path to a landing runway 504 in accordance with at least one embodiment is shown. The navigation display 500 includes the landing runway 504, the landing runway extension 502, and a circling area 506.

The aircraft 200 is flying along an approach flight path 508 leading to the destination airport. The landing runway extension display system 202 received the landing runway 504 from ATC. The landing runway extension display system 202 determined the category of the aircraft 200 and identified the circling area 506 for the identified category of the aircraft 200 at the destination airport. The landing runway extension display system 202 defined the landing runway extension 502 associated with the landing runway 504 based on the desired final approach flight path to the landing runway 504. The landing runway extension display system 202 generated the navigation display 500. In the navigation display 500, the circling area 506 overlays the landing runway 504 and the landing runway extension 502. The landing runway extension 502 extends from the end of the landing runway 504 where the aircraft 200 is expected to touch down to past the outer perimeter of the circling area 506. The navigation display 500 provides the pilot of the aircraft 200 with the situational awareness needed to implement a circling maneuver to align the flight path of the aircraft 200 with the final approach flight path as defined by the landing runway extension 502 while remaining within the circling area 506 under low visibility conditions.

Displaying a landing runway extension defining a desired final approach flight path to a landing runway within a circling area associated with a destination airport on a navigational display may enable a crew member to safely engage in a circling maneuver to guide the aircraft 200 from an approach flight path to the destination airport to a desired final approach flight path to the landing runway. Low visibility conditions can result in a loss of situational awareness. The use of a landing runway extension system 202 to depict the landing runway extension aligned with the desired final approach flight path in the context of the circling area may enhance situational awareness, stabilize a final approach of an aircraft 200 to the landing runway, and decrease the number of accidents associated with circling maneuvers. The use of a landing runway extension system 202 may improve the chances of a successful approach to the landing runway resulting in lower instances of missed approaches and diversion of the aircraft 200 to alternate landing sites. This may lead to decreased fuel use and time savings.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A landing runway extension display system of an aircraft, the system comprising:
at least one processor; and
at least one memory communicatively coupled to the at least one processor, the at least one memory comprising instructions that, upon execution by the at least one processor, cause the at least one processor to:
identify a destination airport of the aircraft based on a flight path of the aircraft received from a flight management system (FMS) of the aircraft;
determine a location of the aircraft based on location data received from at least one geospatial sensor of the aircraft;
identify a landing runway at the destination airport; and
generate a display for display via an onboard display device system of the aircraft when the location of the aircraft is within a pre-defined distance from the destination airport, the display including the landing runway and a landing runway extension associated with a desired final approach flight path to the landing runway.

2. The system of claim 1, wherein the at least one memory further comprises instructions that upon execution by the at least one processor, cause the at least one processor to:
display a landing activation prompt via the onboard display device system when the location of the aircraft is within the pre-defined distance from the destination airport;
determine whether the landing activation prompt has been activated; and
generate the display to include the landing runway extension associated with the final approach flight path to the landing runway based on the determination.

3. The system of claim 1, wherein the at least one memory further comprises instructions that upon execution by the at least one processor, cause the at least one processor to generate the display to include the landing runway extension associated with the final approach flight path to the landing runway, the final approach flight path being different from an approach flight path to the destination airport.

4. The system of claim 1, wherein the at least one memory further comprises instructions that upon execution by the at least one processor, cause the at least one processor to:
display a landing activation prompt via the onboard display device system when the location of the aircraft is within the pre-defined distance from the destination airport;
determine whether the landing activation prompt has been activated; and
generate a circling area associated with the destination airport to overlay the landing runway and the landing runway extension on the display.

5. The system of claim 1, wherein the at least one memory further comprises instructions that upon execution by the at least one processor, cause the at least one processor to:
generate the display, the display comprising a navigation display; and
generate a circling area to overlay the landing runway and the extension of the landing runway at the destination airport on the display, wherein the landing runway extension extends past an outer perimeter of the circling area.

6. The system of claim 5, wherein the at least one memory further comprises instructions that upon execution by the at least one processor, cause the at least one processor to generate the display including the landing runway and the landing runway extension, wherein the landing runway extension extends from one end of the landing runway past the outer perimeter of the circling area.

7. The system of claim 1, wherein the at least one memory further comprises instructions that upon execution by the at least one processor, cause the at least one processor to:
generate the display, the display comprising a navigation display; and
generate a circling area to overlay the landing runway and the extension of the landing runway at the destination airport on the display, wherein the landing runway extension is disposed within an outer perimeter of the circling area.

8. The system of claim 7, wherein the at least one memory further comprises instructions that upon execution by the at least one processor, cause the at least one processor to generate the display including the landing runway and the landing runway extension, wherein the landing runway extension extends from one end of the landing runway to the outer perimeter of the circling area.

9. The system of claim 1, wherein the at least one memory further comprises instructions that upon execution by the at least one processor, cause the at least one processor to:
display a landing activation prompt via the onboard display device system on at least one of a navigation display, a multifunction control display unit (MCDU) display, and a primary flight display (PFD) when the location of the aircraft is within the pre-defined distance from the destination airport; and
display the display via the onboard display device system on at least one of the navigation display, the multifunction control display unit (MCDU) display, and the primary flight display (PFD).

10. The system of claim 1, wherein the at least one memory further comprises instructions that upon execution by the at least one processor, cause the at least one processor to:
display the landing runway using a first format; and
display the landing runway extension using a second format, the first format being different from the second format.

11. The system of claim 1, wherein the at least one memory further comprises instructions that upon execution by the at least one processor, cause the at least one processor to:
display the landing runway using a first color; and
display the landing runway extension using a second color, the first color being different from the second color.

12. A method of displaying a landing runway extension on an aircraft comprising:
identifying a destination airport of the aircraft based on a flight path of the aircraft received from a flight management system (FMS) of the aircraft;
determining a location of the aircraft based on location data received from at least one geospatial sensor of the aircraft;
identifying a landing runway at the destination airport; and
generating a display for display via an onboard display device system of the aircraft when the location of the aircraft is within a pre-defined distance from the destination airport, the display including the landing runway and the landing runway extension associated with a desired final approach flight path to the landing runway.

13. The method of claim 12 further comprising generating the display to include the landing runway extension associated with the final approach flight path to the landing runway, the final approach flight path being different from an approach flight path to the destination airport.

14. The method of claim 12 further comprising:
displaying a landing activation prompt via the onboard display device system when the location of the aircraft is within the pre-defined distance from the destination airport;
determining whether the landing activation prompt has been activated; and
generating a circling area associated with the destination airport to overlay the landing runway and the landing runway extension on the display.

15. The method of claim 12 further comprising:
generating the display, the display comprising a navigation display; and
generating a circling area to overlay the landing runway and the extension of the landing runway at the destination airport on the display, wherein the landing runway extension extends past an outer perimeter of the circling area.
